# EUROPÄISCHE PATENTANMELDUNG

(11) **EP 1 906 166 A2**
(43) Veröffentlichungstag der Anmeldung: **02.04.2008**
(21) Anmeldenummer: 07014263.3
(22) Anmeldetag: 20.07.2007
(51) Int. Cl.: G01N 1/02

(54) **Vorrichtung zur Aufnahme eines hinsichtlich seiner Verunreinigung zu untersuchenden Gegenstandes und zugehörige Untersuchungseinrichtung**

(30) Priorität: 28.09.2006 DE 102006046254
(71) Anmelder: HYDAC FILTERTECHNIK GMBH, 66280 Sulzbach/Saar (DE)
(72) Erfinder: Meurer, Detlef, 66265 Heusweiler (DE)
(74) Vertreter: Bartels & Partner

(57) **Zusammenfassung**

Vorrichtung (1) zur Aufnahme eines hinsichtlich seiner Verunreinigung zu untersuchenden Gegenstandes (2), wobei die Vorrichtung (1) eine verschließbare Öffnung aufweist, über welche der Gegenstand (2) in die Vorrichtung (1) einbringbar ist, sowie einen Einlass (10) für die Zuführung eines Spülmediums und einen Auslass (16) zum Ableiten des Spülmediums, und wobei die Vorrichtung (1) durch einen Beutel gebildet ist, der durch das Zuführen eines Gases aufblähbar ist, sowie eine zugehörige Einrichtung (50) zum Untersuchen eines Gegenstandes (2) mit einer solchen Vorrichtung (1).

## Beschreibung

Die Erfindung betrifft eine Vorrichtung zur Aufnahme eines hinsichtlich seiner Verunreinigung zu untersuchenden Gegenstandes sowie eine zugehörige Einrichtung zum Untersuchen eines Gegenstandes auf Verunreinigungen mit einer solchen Vorrichtung.

Derartige Vorrichtungen und Einrichtungen werden insbesondere zur Untersuchung der Verunreinigung beispielsweise von Werkstücken oder von Komponenten der Hydraulik oder Pneumatik eingesetzt. In modernen Hydraulik- und Fluidsystemen werden immer kleinere, leichtere und leistungsfähigere Komponenten eingesetzt. Durch die Verwendung solcher Komponenten steigt auch die Anforderung an die Bauteil- und Systemreinheit, angefangen in der Produktion, Montage, Lagerung und bis hin zum Betrieb des kompletten Systems. Durch die Bestimmung der Art, Größe und Menge der Verschmutzung können Qualitätsstandards überprüft, dokumentiert und die notwendigen Optimierungsmaßnahmen getroffen werden. Typische Anwendungsgebiete, in denen derartige Vorrichtungen und Einrichtungen eingesetzt werden können, ist die Automobil- und deren Zuliefererindustrie, der Getriebe- und Motorenbau, die Mobilhydraulik sowie die Herstellung von Hydraulik- und Schmiersystemkomponenten.

Derartige Untersuchungsverfahren sind unter dem Begriff "Spritzextraktion" bekannt und diesbezüglich ist auch eine Norm ISO 16232 derzeit in Ausarbeitung. Ein Problem derartiger Untersuchungen ist die Eigenkontamination der Untersuchungseinrichtung, die das Ergebnis wesentlich verfälschen kann. Hinzu kommt, dass auch auf dem Transport, insbesondere bei Verwendung eines nicht hochreinen Transportbehältnisses, der zu untersuchende Gegenstand in unzulässiger Weise weiter verunreinigt wird.

Der Erfindung liegt die Aufgabe zugrunde, eine gattungsgemäße Vorrichtung und eine zugehörige Einrichtung zum Untersuchen eines Gegenstandes auf Verunreinigungen mit einer solchen Vorrichtung bereitzustellen, welche die Nachteile des Standes der Technik überwinden. Insbesondere soll eine Vorrichtung bereitgestellt werden, welche sowohl den Investitionsaufwand für die Bereitstellung der Möglichkeit einer dahingehenden Untersuchung herabsetzt als auch den Aufwand bei der Durchführung der Untersuchung. Außerdem soll die Genauigkeit dahingehender Untersuchungen dadurch verbessert werden, dass eine Fremdverunreinigung des zu untersuchenden Gegenstandes in dem Zeitraum zwischen dem Ausbau oder dem Abschluss der Herstellung des Gegenstandes und dem Durchführen der Untersuchung, beispielsweise während des Transport des zu untersuchenden Gegenstandes zu der Untersuchungseinrichtung, zuverlässig ausgeschlossen ist.

Diese Aufgabe ist durch die im Anspruch 1 bestimmte Vorrichtung und durch die im nebengeordneten Anspruch bestimmte Einrichtung gelöst.

Besondere Ausführungsarten der Erfindung sind in den Unteransprüchen bestimmt.

Gemäß der vorliegenden Erfindung ist die Aufnahmevorrichtung durch ein sack- oder beutelartiges Behältnis aus einem biegsamen Material gebildet, in welche der zu untersuchende Gegenstand einbringbar ist. In einer Ausführungsart weist die Vorrichtung hierzu eine verschließbare Öffnung auf und ist insbesondere in der Art eines Beutels gebildet. Dadurch ist es auch möglich, die Vorrichtung über den zu untersuchenden Gegenstand zu stülpen und ihn mit allen an seiner Oberfläche gegebenenfalls auch nur lose anhaftenden Verunreinigungen aufzunehmen. Dadurch ist auch zuverlässig verhindert, dass Verunreinigungen beim Transport zu der Untersuchungseinrichtung abfallen und bei der anschließenden Untersuchung nicht mehr ausgewertet werden können, weil sie in dem Transportbehältnis verbleiben. Die Vorrichtung kann sowohl als Transportbehältnis als auch als Untersuchungsbehältnis verwendet werden. Außerdem kann die erfindungsgemäße beutelartige Vorrichtung derart hergestellt werden, dass eine Eigenkontamination der Vorrichtung keinen negativen Einfluss auf das Untersuchungsergebnis hat, vorallem ist die Eigenkontamination der Vorrichtung insbesondere mit metallischen Partikel und Verunreinigungen vernachlässigbar. Die Vorrichtung kann beispielsweise aus Kunststoff hergestellt sein.

ln einer Ausführungsart weist die Vorrichtung einen Einlass für die Zuführung eines Spülmediums auf, mittels dem die Verunreinigungen von dem zu untersuchenden Gegenstand abspülbar sind. Der Einlass kann beispielsweise durch einen in die Vorrichtung eingearbeiteten Einlassstutzen gebildet sein, an den außenseitig eine Spülmedienleitung anschließbar ist, und an den innenseitig, gegebenenfalls unter Zwischenschaltung einer flexiblen Leitung, eine Spüldüse anschließbar ist. Als Spüldüse kann auch nur das offene Ende der Leitung dienen.

Das Spülmedium mit den darin aufgenommenen Verunreinigungen wird über einen Auslass aus der Vorrichtung abgeleitet. Anschließend werden die Verunreinigungen heraus gefiltert und insbesondere nach ihrer Art, Größe und Menge näher bestimmt. Der Auslass kann insbesondere an jenem Ende der Vorrichtung angeordnet sein, die im Betriebszustand der Vorrichtung nach unten gerichtet ist, so dass allein aufgrund der Gravitationswirkung das Spülmedium sich im Bereich des Auslasses sammelt.

In einer Ausführungsart weist die Vorrichtung einen Gaseinlass für das Zuführen eines Gases auf, beispielsweise für das Zuführen von insbesondere gefilterter Luft, mittels dem die Vorrichtung aufblähbar ist. Der Gaseinlass kann durch einen Stutzen gebildet sein, an den eine Gaszuführungsleitung anschließbar ist. Vorzugsweise beabstandet von dem Gaseinlass kann die Vorrichtung außerdem einen Gasauslass aufweisen für das Austreten überschüssigen Gases. Dadurch ist ein Platzen oder Aufreißen der Vorrichtung in Folge der Druckbeaufschlagung durch das zugeführte Gas zuverlässig verhindert. Der Gasauslass umfasst vorzugsweise ein Gasauslassventil, insbesondere ein Überdruckventil, das gleichzeitig ein Eindringen von Fremdstoffen in den Beutel zuverlässig verhindert. Der Gasauslass ist vorzugsweise an einer Position angebracht, die im Betriebszustand der Vorrichtung oben liegt.

In einer Ausführungsart ist die Vorrichtung aus einem gegenüber dem Spülmedium resistenten und dichten Werkstoff hergestellt oder weist jedenfalls eine Beschichtung mit einem solchen Werkstoff auf.

Beispielsweise ist die Vorrichtung aus einem Polymerkunststoff hergestellt. In einer Ausführungsart ist jedenfalls die Mantelfläche der Vorrichtung mindestens abschnittsweise, vorzugsweise vollflächig, aus einer Kunststoffolie hergestellt. In einer Ausführungsart beträgt die Dicke der Folie zwischen 20 µm und 1 mm, insbesondere zwischen 20 µm und 0,5 mm und vorzugsweise zwischen 50 µm und 300 µm.

In einer Ausführungsart weist der Beutel einen zylindrischen Abschnitt auf, insbesondere einen kreiszylindrischen Abschnitt, in dessen Bereich der zu untersuchende Gegenstand aufnehmbar ist und in dem vorzugsweise auch der Einlass für die Zuführung des Spülmediums angeordnet ist. Die lichte Weite dieses zylindrischen Abschnitts ist daher so gewählt, dass der zu untersuchende Gegenstand einfach aufnehmbar ist. Typische Werte für die lichte Weite betragen beispielsweise zwischen 20 und 80 cm.

ln einer Ausführungsart weist der Beutel einen sich verjüngenden Abschnitt auf, insbesondere einen Abschnitt der sich in Richtung auf den Auslass zum Ableiten des Spülmediums hin verjüngt. Im Betriebszustand der Vorrichtung ist der sich verjüngende Abschnitt vorzugsweise nach unten gerichtet. In einer Ausführungsart ist der Gaseinlass für das Zuführen des Gases zum Aufblähen der Vorrichtung ebenfalls in dem sich verjüngenden Abschnitt angeordnet. An dem freien Ende des sich verjüngenden Abschnitts kann unmittelbar eine Leitung zum Ableiten des Spülmediums angeschlossen werden, beispielsweise mittels eines Anschlusstutzens, der in eine sich am freien Ende des sich verjüngenden Abschnitts gebildete Auslassöffnung einsteckbar ist und mittels einer Klemmung mediendicht mit der Vorrichtung verbindbar ist.

In einer Ausführungsart kann unmittelbar an den Auslass auch eine Filtereinrichtung, beispielsweise ein Membranhalter, angeschlossen werden, mittels welcher die in dem abgeleiteten Spülmedium enthaltenen Verunreinigungen herausgefiltert werden, um sie anschließend hinsichtlich ihrer Art, Größe und/oder Menge zu untersuchen.

In einer Ausführungsart weist die Vorrichtung eine Einrichtung zum Manipulieren des sich innerhalb der Vorrichtung befindlichen zu untersuchenden Gegenstandes auf, beispielsweise in Form von Einstülpungen. Diese Einstülpungen können einstückig mit der Vorrichtung ausgebildet und beispielsweise in der Art einer Glove Box oder eines Handschuhkastens geformt sein. Alternativ hierzu können die Einstülpungen auch separat hergestellt sein und in dafür vorgesehene Öffnungen in der Mantelfläche der Vorrichtung eingesetzt und dicht mit dieser verbunden sein. Insbesondere können diese Einstülpungen ein oder mehrere Finger aufweisen, so dass es möglich ist, mittels dieser Einstülpungen den zu untersuchenden Gegenstand zu fassen und in die Vorrichtung einzubringen und diese anschließend zu verschließen. Dadurch werden auch nur verhältnismäßig lose an der Oberfläche des Gegenstandes anhaftende Verunreinigungen in die Vorrichtung eingebracht, anschließend abgespült und können daher ausgewertet werden.

In einer Ausführungsart weist der Beutel eine Verschlusseinrichtung auf, mittels welcher die Öffnung, über welche der zu untersuchende Gegenstand in die Vorrichtung einbringbar ist, wieder verschließbar ist. Der Verschluss kann nur abschnittsweise ausgebildet sein, so dass ein einstückig mit einem Grundteil ausgebildetes Verschlussteil der Vorrichtung abklappbar ist beispielsweise unter Verwendung des folienartigen Werkstoffes der Vorrichtung als Folienscharnier. Alternativ hierzu kann ein Verschlussteil der Vorrichtung auch vollständig abnehmbar sein und mittels der Verschlusseinrichtung anschließend wieder aufsetzbar. In einer Ausführungsart erlaubt die Verschlusseinrichtung ein mehrmaliges Öffnen und Schließen. Der Verschluss kann die Vorrichtung mediendicht verschließen, insbesondere flüssigkeitsdicht und vorzugsweise auch im wesentlichen gasdicht.

In einer Ausführungsart weist die Vorrichtung mindestens ein Befestigungsmittel auf, mittels dem die Vorrichtung an einer Halteeinrichtung befestigbar ist. Beispielsweise kann die Vorrichtung einen Befestigungshaken oder eine Befestigungsschlaufe aufweisen, mittels der die Vorrichtung an einer Aufhängeeinrichtung aufhängbar ist. Das Befestigungselement kann an der Vorrichtung festlegbar sein oder auch einstückig von der Vorrichtung ausgebildet sein. In einer Ausführungsart ist das Befestigungselement an dem Verschlussteil der Vorrichtung angeordnet.

Die Erfindung umfasst auch eine Einrichtung zum Untersuchen eines Gegenstandes auf Verunreinigungen mit einer erfindungsgemäßen Vorrichtung zum Aufnehmen des Gegenstandes wie vorstehend beschrieben. Die Einrichtung weist weiterhin eine Filtereinrichtung auf, die mit dem Auslass zum Ableiten des Spülmediums verbunden ist und mittels der die Verunreinigungen aus dem Spülmedium filtrierbar sind.

Weitere Vorteile, Merkmale und Einzelheiten der Erfindung ergeben sich aus den Unteransprüchen und der nachfolgenden Beschreibung, in der unter Bezugnahme auf die Zeichnungen mehrere Ausführungsbeispiele im Einzelnen beschrieben sind. Dabei können die in den Ansprüchen und in der Beschreibung erwähnten Merkmale jeweils einzeln für sich oder in beliebiger Kombination erfindungswesentlich sein.
- Fig. 1: zeigt eine perspektivische Ansicht eines Ausführungsbeispiels einer erfindungsgemäßen Vorrichtung, und
- Fig. 2: zeigt ein Ausführungsbeispiel einer erfindungsgemäßen Einrichtung zum Untersuchen eines Gegenstandes auf Verunreinigungen.

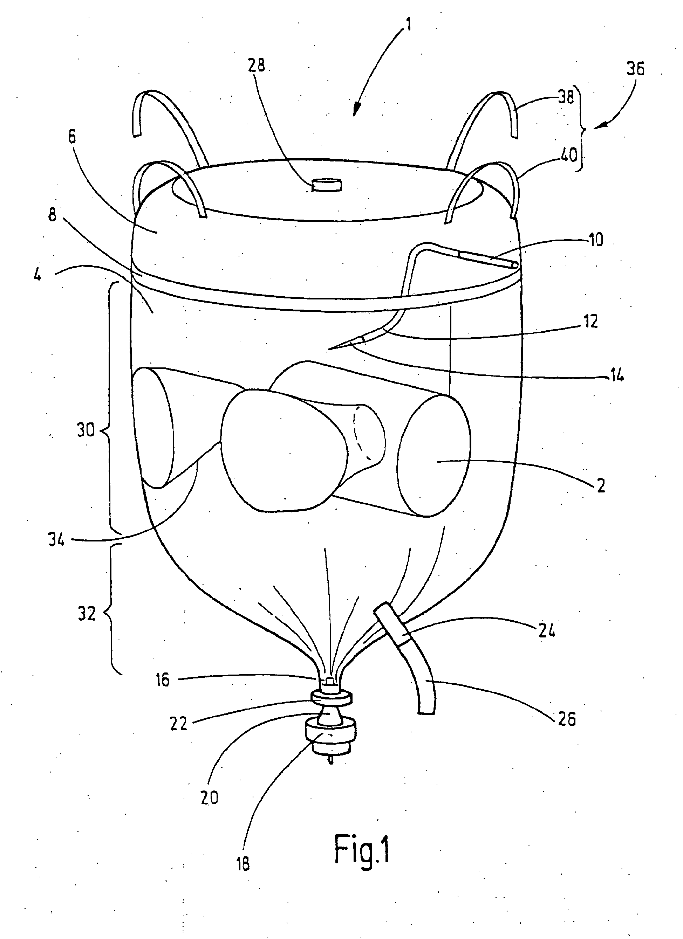

Fig. 1 zeigt eine perspektivische Ansicht eines Ausführungsbeispiels einer erfindungsgemäßen Vorrichtung 1 zur Aufnahme eines hinsichtlich seiner Verunreinigung zu untersuchenden Gegenstandes 2. Im dargestellten Ausführungsbeispiel ist der Gegenstand 2 schematisch als kreiszylindrisches Bauteil dargestellt. Grundsätzlich kann es sich dabei um beliebig geformte Gegenstände handeln, beispielsweise um Komponenten aus dem Getriebe-und Motorenbau oder aus Hydraulik- oder Schmiersystemen. Ein typisches Beispiel zu untersuchender Gegenstände sind etwa Einspritzdüsen, die hinsichtlich ihrer Verunreinigung nach Durchlaufen des Fertigungsprozesses untersucht werden müssen, weil Verunreinigungen im Betrieb der Einspritzdüse zu Betriebsstörungen oder gar Ausfällen führen können.

Die Vorrichtung 1 umfasst ein Grundteil 4 und ein Verschlussteil 6, die mittels einer Verschlusseinrichtung 8 miteinander verbindbar sind und dadurch das Grundteil 4 mit dem Verschlussteil 6 verschließbar ist. Bei geöffnetem oder abgenommenem Verschlussteil 6 weist das Grundteil 4 der Vorrichtung 1 eine Öffnung auf, über welche der Gegenstand 2 in die Vorrichtung 1 einbringbar ist.

Die Vorrichtung 1 weist weiterhin einen Einlass 10 auf für die Zuführung eines Spülmediums. Im dargestellten Ausführungsbeispiel ist der Einlass 10 im Bereich des Verschlussteils 6 angeordnet und als Einlassstutzen ausgebildet, an denen außenseitig eine Zuführleitung für das Spülmedium anschließbar ist. lnnenseitig schließt sich an den Einlass 10 über eine vorzugsweise biegsame Verbindungsleitung 12, beispielsweise einen flexiblen Schlauch, eine Spüldüse 14 an, mittels welcher der Gegenstand 2 bespülbar ist.

Die Vorrichtung 1 weist weiterhin einen Auslass 16 auf, zum Ableiten des Spülmediums aus der Vorrichtung 1. Im dargestellten Ausführungsbeispiel ist an den Auslass 16 ein Membranhalter 18 angeschlossen, dessen mindestens abschnittsweise kegelförmiger Stutzen 20 in eine durch den Auslass 16 gebildete Öffnung eingesteckt ist und anschließend die Vorrichtung 1 mittels eines Verbindungselements 22, beispielsweise einer Schlauchklemme, dicht mit dem Membranhalter 18 verbunden ist. In den Membranhalter 18 kann ein Filterelement eingesetzt sein, mittels dem die in dem abgeleiteten Spülmedium enthaltenen Verunreinigungen herausgefiltert werden können und anschließend hinsichtlich ihrer Art, Größe und/oder Menge untersucht werden können.

Die Vorrichtung 1 ist in der Art eines Beutels gebildet, der im Ausgangszustand flach zusammenlegbar ist und daher nur ein geringes Lagervolumen hat. Die Vorrichtung 1 weist einen Gaseinlass 24 auf, für das Zuführen eines Gases, mittels dem die Vorrichtung 1 aufblähbar ist.
Der Gaseinlass 24 kann beispielsweise durch einen einstückig von der Vorrichtung 1 ausgebildeten oder fest mit der Vorrichtung 1 verbundenen, insbesondere mit dieser verklebten, Gaseinlassstutzen gebildet sein, an welchem eine Gaszuführungsleitung 26 anschließbar ist. Der Anschluss der Gaszuführungsleitung 26 kann lösbar sein und insbesondere mittels einer Klemmverbindung sicherbar sein.

Die Vorrichtung 1 weist außerdem einen Gasauslass 28 auf, für das Austreten von überschüssigem Gas aus der Vorrichtung 1. In einer Ausführungsart strömt permanent Gas über den Gaseinlass 24 in die Vorrichtung 1 hinein und tritt am Gasauslass 28 aus der Vorrichtung 1 aus. Dadurch ist gewährleistet, dass die beutelartige Vorrichtung 1 stets prall gefüllt ist, ohne dass die Gefahr besteht, dass die Vorrichtung 1 reißt oder platzt. Der Gasauslass 28 umfasst vorzugsweise ein Gasauslassventil, dass auch die Funktion eines Überdruckventiles aufweisen kann, und insbesondere dazu vorgesehen ist, ein Eindringen von Fremdstoffen in die Vorrichtung 1 zu verhindern.

Im dargestellten Ausführungsbeispiel weist das Grundteil 4 der Vorrichtung 1 einen im wesentlichen zylindrischen Abschnitt 30 und einen sich verjüngenden Abschnitt 32 auf, die unmittelbar aneinander anschließen können. Im Bereich des zylindrischen Abschnitts 30 wird der zu untersuchende Gegenstand 2 aufgenommen. Der sich verjüngende Abschnitt 32 bildet an seinem dem zylindrischen Abschnitt 30 gegenüberliegenden freien Ende vorzugsweise einstückig den Auslass 16. In dem in der Figur 1 dargestellten Betriebszustand ist der sich verjüngende Bereich 32 nach unten gerichtet und insbesondere unterhalb des zylindrischen Abschnitts 30 angeordnet. In dem sich verjüngenden Bereich 32 ist auch der Gaseinlass 24 angeordnet.

Die Vorrichtung 1 weist mindestens eine Einrichtung 34 zum Manipulieren des Gegenstandes 2 auf, die im dargestellten Ausführungsbeispiel durch Eingriffe gebildet sind, mittels denen von außerhalb der Vorrichtung 1 der Gegenstand 2 manipulierbar ist, insbesondere innerhalb der Vorrichtung 1 positionierbar ist, um ein vollständiges Abspülen der Verunreinigungen zu ermöglichen. Die Einrichtung 34 zum Manipulieren ist insbesondere durch Einstülpungen gebildet, wie sie etwa aus Handschuhkästen oder einer Glove Box bekannt sind. Dementsprechend sind insbesondere zwei solcher Einrichtungen 34 an der Vorrichtung 1 vorgesehen, und zwar vorzugsweise im zylindrischen Abschnitt 30 des Grundteils 4 der Vorrichtung 1.

Durch den Gaseinlass 24 ist das Innere der Vorrichtung 1 mit einem gegenüber dem Außendruck erhöhten Druck beaufschlagbar, um eine pralle Füllung der beutelartigen Vorrichtung 1 zu gewährleisten und insbesondere dadurch das Bilden beispielsweise von Falten auf der Innenseite der Vorrichtung 1 zu vermeiden. In derartigen Falten könnten sich Verunreinigungen, die von dem Gegenstand 2 abgespült wurden, festsetzen, und daher nicht für eine Untersuchung der Verunreinigung zur Verfügung stehen würden. Durch die Vermeidung solcher Falten ist die Genauigkeit der Untersuchung weiter erhöht.

In einer Ausführungsart ist das Grundteil 4 mindestens abschnittsweise durch eine Kunststoffolie hergestellt. Die Kunststoffolie ist gegenüber dem Spülmedium ausreichend resistent und dicht. Das Verschlussteil 6 kann ebenfalls aus einer solchen Folie hergestellt sein, oder auch als starrer Formkörper ausgebildet sein. Bei der Ausbildung als starrer Formkörper ist vorteilhaft, dass das Verschlussteil 6 formgebend auf das ihm zugewandte Ende des Grundteils 4 wirkt, was insbesondere dazu führt, dass ein glattes Aufblähen der Vorrichtung 1 mit einem geringeren Überdruck möglich ist.

Im dargestellten Ausführungsbeispiel ist der Gasauslass 28 vorzugsweise zentrisch auf der Oberseite des Verschlussteils 6 angeordnet. Das Verschlussteil 6 ist wannenförmig oder topfförmig mit einer kreisförmigen Grundfläche und kann an dem Grundteil 4 mittels einer Verschlusseinrichtung 8 lösbar oder unlösbar festlegbar sein. An seiner Außenseite ist mindestens ein Befestigungselement 36 angeordnet, mittels dem die Vorrichtung 1 an eine Halteeinrichtung befestigbar ist, insbesondere an einer Aufhängeeinrichtung aufhängbar. Im dargestellten Ausführungsbeispiel weist die Vorrichtung 1 zwei voneinander beabstandet angeordnete Befestigungshaken 38 und zwei voneinander beabstandet angeordnete Befestigungsschlaufen 40 auf. Die Befestigungsmittel 36 können als Bandabschnitte fest mit dem Verschlussteil 6 verbunden sein, beispielsweise aufgeklebt sein.

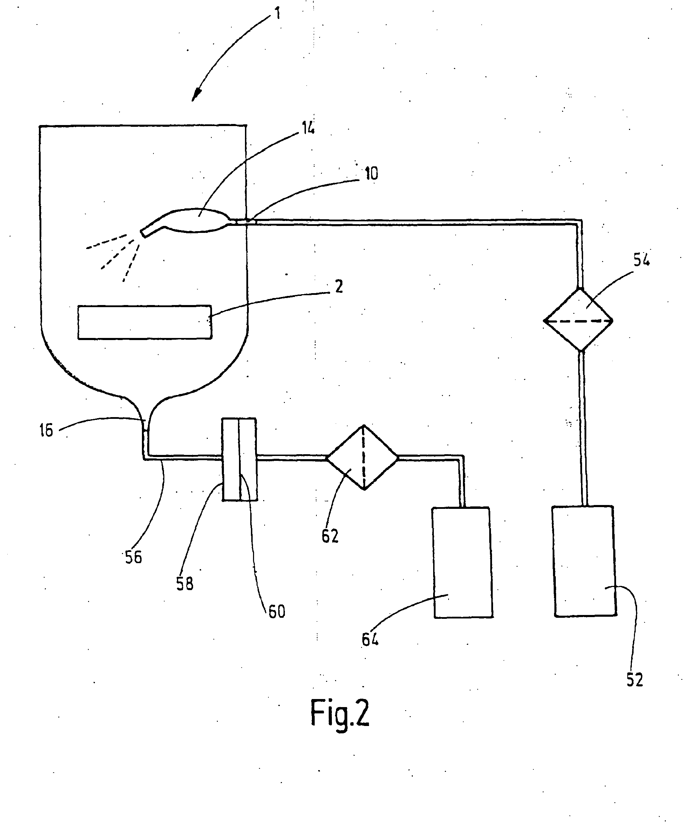

Die Figur 2 zeigt ein Ausführungsbeispiel einer erfindungsgemäßen Einrichtung 50 zum Untersuchen eines Gegenstandes 2 auf Verunreinigungen mit einer Vorrichtung 1 zum Aufnehmen des Gegenstandes, wie sie vorstehend anhand der Figur 1 näher beschrieben ist. Die Vorrichtung 1 ist in der Figur 2 nur schematisch dargestellt, insbesondere sind aus Gründen der Übersichtlichkeit nicht alle Komponenten der Vorrichtung 1 in der Figur 2 dargestellt.

Aus einem Vorratstank 52 wird über einen Vorfilter 54 das Spülmedium dem Einlass 10 der Vorrichtung 1 zugeführt. Mittels der Spüldüse 14, die auch mit einem Pistolengriff und abschaltbar ausgebildet sein kann und die über die in der Figur 1 dargestellte Einrichtung 34 zum Manipulieren betätigbar ist, wird der Gegenstand 2 besprüht und die an ihm anhaftenden oder angelagerten Verunreinigungen abgespült. Diese sammeln sich aufgrund der Gravitationskraft im unteren Bereich der Vorrichtung 1 und werden dort über den Auslass 16 und gegebenenfalls ein Leitungsstück 56 der Filtereinrichtung 58 zugeführt, mittels welcher die Verunreinigungen aus dem Spülmedium filtrierbar ist.

In die Filtereinrichtung 58 ist hierzu ein Filterelement 60 einsetzbar, dass nach dem Spül- und Filtervorgang entnehmbar ist und an dem die herausgefilterten Verunreinigungen anhaften, die anschließend durch verschiedene Untersuchungsmöglichkeiten, wie beispielsweise Mikroskopie oder spektroskopische Analyse, hinsichtlich ihrer Art, Größe und/oder Menge untersucht werden können. Die Filtereinrichtung 58 ist über ein zusätzliches Schutzfilter 62 mit einem Ablauftank 64 verbunden, der auch mit dem Vorratstank 52 verbunden sein kann.

Die erfindungsgemäße Vorrichtung hat den Vorteil, dass ein hochreines Behältnis bereitgestellt werden kann, das gegebenenfalls auch als Transportbehältnis oder Transportbeutel verwendet werden kann. So ist gewährleistet, dass durch die Vorrichtung keine Partikel mit einer Größe von beispielsweise mehr als 100 µm oder mehr als 50 µm eingebracht werden. Der einmal in die Vorrichtung 1 eingebrachte Gegenstand wird bis zum Abschluss der Untersuchung nicht mehr aus der Vorrichtung 1 entnommen. Eine Fremdverunreinigung entfällt daher, einschließlich eine Verunreinigung auf dem Transport zu der Untersuchungseinrichtung.

Erfindungsgemäße Vorrichtungen können beispielsweise dann hochrein hergestellt werden, wenn es sich um beutelartige Behältnisse handelt, die vorzugsweise aus einer hochreinen Kunststoffolie hergestellt werden.
Als Spülmedium können alle geeigneten Medien verwendet werden, beispielsweise kohlenwasserstoffhaltige Reinigungsmittel, wie sie etwa unter dem Begriff A3-Reiniger oder "Industrie-Kaltentfetter" bekannt sind.

## Patentansprüche

1. Vorrichtung (1) zur Aufnahme eines hinsichtlich seiner Verunreinigung zu untersuchenden Gegenstandes (2), wobei die Vorrichtung (1) eine verschließbare Öffnung aufweist, über welche der Gegenstand (2) in die Vorrichtung (1) einbringbar ist, sowie einen Einlass (10) für die Zuführung eines Spülmediums und einen Auslass (16) zum Ableiten des Spülmediums, und wobei die Vorrichtung (1) durch einen Beutel gebildet ist, der durch das Zuführen eines Gases aufblähbar ist.

2. Vorrichtung (1) nach Anspruch 1, **dadurch gekennzeichnet, dass** der Beutel einen Gaseinlass (24) für das Zuführen des Gases aufweist, insbesondere einen Gaseinlassstutzen, an welchen eine Gaszuführungsleitung (26) anschließbar ist.

3. Vorrichtung (1) nach einem der vorangehenden Ansprüche, **dadurch gekennzeichnet, dass** der Beutel einen Gasauslass (28) für das Austreten überschüssigen Gases aufweist, und dass der Gasauslass (28) vorzugsweise ein Gasauslassventil umfasst, das ein Eindringen von Fremdstoffen in den Beutel verhindert.

4. Vorrichtung (1) nach einem der vorangehenden Ansprüche, **dadurch gekennzeichnet, dass** der Beutel aus einem gegenüber dem Spülmedium resistenten und dichten Werkstoff hergestellt ist oder jedenfalls eine Beschichtung mit einem solchen Werkstoff aufweist.

5. Vorrichtung (1) nach einem der vorangehenden Ansprüche, **dadurch gekennzeichnet, dass** eine Mantelfläche des Beutels mindestens abschnittsweise aus einer Kunststofffolie hergestellt ist.

6. Vorrichtung (1) nach einem der vorangehenden Ansprüche, **dadurch gekennzeichnet, dass** der Beutel einen zylindrischen Abschnitt (30) aufweist, insbesondere einen kreiszylindrischen Abschnitt.

7. Vorrichtung (1) nach Anspruch 6, **dadurch gekennzeichnet, dass** der Einlass (10) für die Zuführung des Spülmediums in dem zylindrischen Abschnitt (30) angeordnet ist.

8. Vorrichtung (1) nach einem der vorangehenden Ansprüche, **dadurch gekennzeichnet, dass** der Beutel einen sich verjüngenden Abschnitt (32) aufweist.

9. Vorrichtung (1) nach Anspruch 8, **dadurch gekennzeichnet, dass** der Auslass (16) zum Ableiten des Spülmediums in dem sich verjüngenden Abschnitt (32) angeordnet ist, insbesondere an einem freien Ende des sich verjüngenden Abschnitts (32).

10. Vorrichtung (1) nach Anspruch 8 oder 9, **dadurch gekennzeichnet, dass** der Gaseinlass (24) für das Zuführen des Gases in dem sich verjüngenden Abschnitt (32) angeordnet ist.

11. Vorrichtung (1) nach einem der vorangehenden Ansprüche, **dadurch gekennzeichnet, dass** der Beutel eine Einrichtung (34) zum Manipulieren des Gegenstandes (2) innerhalb des Beutels aufweist, insbesondere in den Beutel hineinragende Einstülpungen.

12. Vorrichtung (1) nach einem der vorangehenden Ansprüche, **dadurch gekennzeichnet, dass** der Beutel eine Verschlusseinrichtung (8) aufweist, mittels welcher die Öffnung verschließbar ist.

13. Vorrichtung (1) nach einem der vorangehenden Ansprüche, **dadurch gekennzeichnet, dass** der Beutel mindestens ein Befestigungselement (36) aufweist, insbesondere einen Befestigungshaken (38) und/oder eine Befestigungsschlaufe (40), mittels dem der Beutel an einer Halteeinrichtung befestigbar ist, insbesondere an einer Aufhängeeinrichtung aufhängbar.

14. Einrichtung (50) zum Untersuchen eines Gegenstandes (2) auf Verunreinigungen mit einer Vorrichtung (1) zum Aufnehmen des Gegenstandes (2) gemäß einem der vorangehenden Ansprüche, **dadurch gekennzeichnet, dass** die Einrichtung (50) weiterhin eine Filtereinrichtung (58) aufweist, die mit dem Auslass (16) zum Ableiten des Spülmediums verbunden ist und mittels der die Verunreinigungen aus dem Spülmedium filterbar ist.
